# EUROPEAN PATENT APPLICATION

(11) **EP 1 283 465 A2**
(43) Date of publication of application: **12.02.2003**
(21) Application number: 02254919.0
(22) Date of filing: 12.07.2002
(51) Int. Cl.: G06F 9/455

(54) **Transforming & caching computer programs**

(30) Priority: 08.08.2001 US 924260
(71) Applicant: Hewlett-Packard Company, Palo Alto, CA 94304 (US)
(72) Inventor: Deusterwald, Evelyn, Somerville, MA 02144 (US); Desoli, Giuseppe, Como 22100 (IT); Faraboschi, Paolo, Brighton, MA 02135 (US); Fisher, Joseph A., Brookline, MA 02446 (US); Bala, Vasanth, Sudbury, MA 01776 (US)
(74) Representative: Jehan, Robert

(57) **Abstract**

Apparatus for dynamically transforming and caching at least one computer program (12) comprises computer executable instructions stored on one or more computer readable storage media for dynamically transforming (42) and caching (36) code fragments and for causing the code fragments to be executed by at least one computer processor (14). The apparatus also includes instructions providing an application programming interface (22) enabling the at least one computer program (12) to activate the instructions for dynamically transforming code fragments and the instructions for caching code fragments.

## Description

This invention relates generally to the transforming and caching of computer programs, in the preferred embodiment to explicit or transparent dynamic transformation of executing binary program code, including emulating and translating code written for multiple instruction set architectures on incompatible hardware.

As is generally known, computers are used to manipulate data under the control of software. Modern digital computers typically include components such as one or more microprocessors, random-access memory, storage devices such as hard disks, CD-ROM and floppy drives, and other input/output devices such as a monitor, keyboard, and mouse. Computers, in particular multi-purpose computers, are usually controlled by operating system software, which in turn executes user application software. Both operating system software and user application software is written to execute on a given type of computer hardware. That is, software is written to correspond to the particular instruction set architecture in a computer, the set of instructions that the processor in the computer recognizes and can execute. If the software is executed on a computer without an operating system, the software must also be written to correspond to the particular set of components or peripherals in the computer.

Computers widely available today have many different instruction set architectures, such as the X86 architecture of the Intel Corporation, the PA-RISC architecture of the Hewlett Packard Corporation, the Itanium architecture of the Intel and Hewlett Packard Corporations, the Power PC® architecture of Motorola,IBM, and Apple, or the Alpha® and VAX® architectures of the Digital Equipment Corporation. Furthermore, these architectures are frequently upgraded and modified with each new generation of microprocessors, generally providing additional processing power. Unfortunately, as computer hardware is upgraded or replaced, the preexisting software, which was created at enormous cost and effort, is rendered obsolete. Since the software was written for a previous instruction set architecture, it generally contains instructions which the new computer hardware will not understand. Not only does this require a huge capital expenditure to update or replace the software, but the new software often requires retraining of the users. For example, at the consumer level of computer systems, Apple Computer, Inc. has produced computers with processors including the 6802 microprocessor from MOS Technologies, the 6502A from Synertek, the MC68000 family of processors from Motorola, and the PowerPC processors from Motorola, IBM, and Apple, each with different instruction set architectures. Each time a new computer system appeared with a different instruction set architecture, the previous software become obsolete and millions of users had to learn to use new software. More recently, in large mainframe computing systems such as banking computer systems, a packaged solution of computer hardware and custom programmed software with a relatively long life expectancy are often provided by a single vendor. When the system is upgraded, a new packaged solution with different computer hardware and new custom software replaces the previous solution. This need to replace software whenever computer hardware is replaced is enormously expensive, both in capital costs and training costs for users.

Various responses to this problem are currently used, such as maintaining obsolete computer hardware far beyond its design life expectancy. Particularly in massive critical systems, a great deal of money and effort is spent maintaining outdated computer hardware in order to avoid updating software, both because of the expense of updating the software and the inevitable operating errors due to bugs in the new software. For example, attempting to upgrade computer hardware for air traffic control systems has required decades of effort. Clearly, however, maintaining obsolete computer hardware is not an ideal solution, and a need remains for a better way to upgrade hardware and maintain existing software.

Another existing response to this problem, and perhaps the most common, is simply to rewrite the software each time the computer hardware is upgraded. However, as software becomes larger and more complex, the cost of rewriting increases. Furthermore, frequent changes in software interfaces tend to frustrate and alienate users.

Software developers have increasingly turned to programming in high level languages like C++. The high level program code is then compiled by a compiler program to convert it to machine language binary programs targeted at a specific instruction set architecture. An attempt is made to program the high level program code to be hardware independent, so that the same code can be compiled by different compilers for various types of computer hardware. This response to the problem is moderately successful, since compilers for each instruction set architecture are created each time a new architecture appears. However, this response does not address the issue of changing peripherals or other components in computer systems. For example, although much of the program code may compile on a new compiler without problems, hardware specific program code, i.e., code for controlling specific hardware like network or communication circuitry, has to be rewritten even if it is in a high level language. Also, it is often necessary to modify even high level program code somewhat before recompiling with a new compiler, since compilers tend to have different compiler directives or syntax, as well as having their own bugs and idiosyncracies.

Another existing response to this problem is to write computer programs in a hardware independent language, such as JAVA® of Sun Microsystems, Inc. However, hardware independent languages are typically quite slow, as they are executed by an emulation program or interpreter which creates a virtual processor on the physical computer hardware. Thus, hardware independent languages generally do not provide any computer instructions which are native to the target computer system, making all execution uniformly slow. Furthermore, a different interpreter must be created for each instruction set architecture on which JAVA® software is to run.

Finally, translators have been written for translating computer software from one particular instruction set architecture to another. However, translators have been limited to point to point solutions, necessitating a new translator for each legacy architecture.

As software and hardware becomes more complex and continues to evolve, many other software manipulation problems have arisen and have been addressed by point to point solutions, such as code optimization, hardware abstraction, etc. Creating a unique and independent point to point solution for these issues is costly and inefficient. Furthermore, when multiple software manipulation problems are addressed simultaneously, such as translation from one instruction set architecture to another and optimization for the new instruction set architecture, execution is greatly slowed and errors are likely by using multiple point solutions in a cascade.

The present invention seeks to provide improved transforming and caching of computer programs.

According to an aspect of the present invention there is provided apparatus for dynamically transforming and caching at least one computer program as specified in claim 1.

The preferred embodiments can provide a system for reusing legacy computer software on incompatible or updated computer hardware. They can also provide a translation system to translate from multiple instruction set architectures to another instruction set architecture; a system to facilitate code transformation to migrate between instruction set architectures or between computer systems having different components or peripheral configurations; and/or a system to provide basic services to meet a number of code ransformation and manipulation goals.

The preferred embodiment provides a Dynamic Execution Layer Interface (DELI) that executes on a computer processor underneath applications, either above or below the operating system level. The DELI is a software layer, sitting right above the hardware or the operating system, which receives fragments of binary code and transforms them before they are executed by the hardware. Execution of applications, and optionally the operating system, is thus controlled by the DELI to provide dynamic code transformation services which facilitate translation of the application from one instruction set architecture to another. In particular, the DELI provides support for dynamic transforming such as caching and linking of code. The caching and linking services of the DELI support a wide variety of applications that require dynamic code transformation, such as emulation, dynamic translation, optimization or transparent remote code execution.

The DELI may execute in either of two modes, or in a combination of the two. First, the DELI may operate in a transparent mode by transparently taking control of an executing program. Second, the DELI exports its services through an application programming interface (API) to the application, allowing it to control how the DELI operates and how it reacts to certain system events.

The dynamic code transformation services in DELI enable and facilitate dynamic translation or emulation of computer software either in binary or source code form from any of a number of instruction set architectures to another. The DELI may also provide translation and emulation services for completely or partially incompatible peripherals and other components. That is, if the software was designed to control a certain set of peripherals or computer components, the DELI can provide the same functionality with similar but different or incompatible hardware, or can completely emulate the previous hardware via software if such hardware is unavailable.

Thus, there may be provided apparatus for dynamically transforming and caching at least one computer program which comprises computer executable instructions stored on one or more computer readable storage media for dynamically transforming and caching code fragments and for causing the code fragments to be executed by at least one computer processor. The apparatus also includes instructions providing an application programming interface enabling at least one computer program to activate the instructions for dynamically transforming code fragments and the instructions for caching code fragments.

There may also be provided an apparatus for dynamically transforming and caching at least one computer program, the apparatus comprising computer executable instructions stored on one or more computer readable storage media for dynamically transforming, optimizing, and caching code fragments. The apparatus also includes instructions for changing hardware control code in the code fragments. The apparatus also includes instructions for transparently obtaining code fragments from at least one computer program. The apparatus also includes instructions providing an application programming interface enabling at least one computer program to activate the instructions for dynamically transforming and caching code fragments. Finally, the apparatus also includes instructions for causing the code fragments to be executed by at least one computer processor.

There may also be provided apparatus for executing a plurality of software applications, the apparatus comprising computer executable instructions stored on one or more computer readable storage media for obtaining portions of computer program code from the plurality of software applications, instructions for dynamically transforming and caching the portions of computer program code to create transformed code fragments, and instructions for executing the transformed code fragments.

An embodiment of the present invention is described below, by way of example only, with reference to the accompanying drawings, in which:
FIG. 1 is an exemplary block diagram illustrating the operation of a Dynamic Execution Layer Interface (DELI) executing on a computer system to provide dynamic transformation services to applications and operating systems;
FIG. 2 is an exemplary block diagram illustrating the operation of the core module of the DELI of FIG. 1, and
FIG. 3 is an exemplary block diagram illustrating the use of the DELI of FIG. 1 to facilitate emulation of non-native applications.

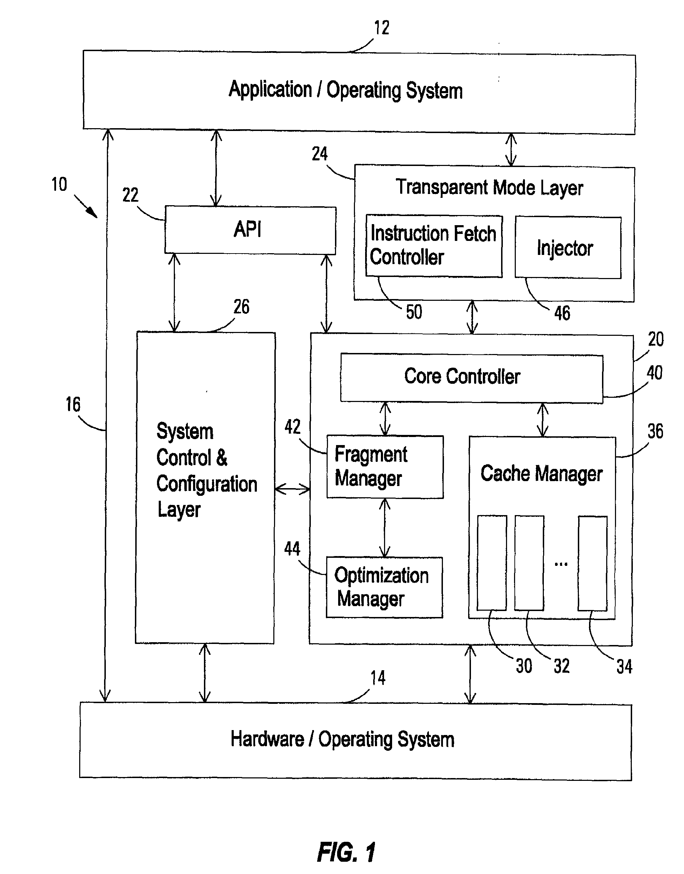

An exemplary preferred embodiment of a Dynamic Execution Layer Interface (DELI) 10 is illustrated in FIG. 1 as it could be used for dynamic computer program code transformation and to support code caching and linking. The caching and linking services of the DELI 10 support a wide variety of applications that require dynamic code transformation, such as emulation, dynamic translation and optimization, transparent remote code execution, and remapping of computer system functionality for virtualized hardware environments. For example, the DELI 10 may be used to facilitate dynamic emulation and translation of software written for multiple instruction set architectures, or to facilitate dynamic optimization of native or non-native code. The DELI 10 is not itself an emulator or translator, but it includes and provides support for efficient emulators as DELI-aware applications, as will be described in detail hereinafter. The DELI 10 operates in one of two modes, or in a combination of the two. First, the DELI 10 may operate in a transparent mode by automatically taking control of an executing program in such a way that the executing program is unaware that it is not executing directly on computer hardware. Second, the DELI 10, in a non-transparent mode, exports its services through an application programming interface (API) to applications, allowing them to control how the DELI 10 operates and how it reacts to certain system events.

As shown in FIG. 1, the DELI 10 is a software layer residing between at least one application 12 and computer hardware 14. The DELI 10 may reside either above or below an operating system (OS), if an operating system is being used. The capabilities that the DELI 10 can provide vary depending on whether it operates above or below the OS. For example, if the DELI 10 operates above the OS, it can only control execution of applications, not the OS. If the DELI 10 operates below the OS, the DELI 10 can also control the execution of system code, in addition to the application code, since it will have access to an instruction stream which could include a mix of system and user code both from the OS and the user level applications. Depending on what uses of the DELI 10 are the current focus, operation of the DELI 10 above the OS may be sufficient, such as when used to dynamically optimize execution of an application. The description of the exemplary preferred embodiment of FIG. 5 1 will be given with respect to dynamic transformation of an application rather than an OS, so the OS is not explicitly shown. However, in the block diagram of FIG. 1 the OS could be included either in the application element 12 or the hardware element 14. Alternatively, the system may omit an operating system altogether, as is the case in many embedded computer systems.

The DELI 10 may be written in any high or low level computer language desired, such as 'C' or Assembly or a combination of the two.

The application 12 may comprise any type of program code containing instructions to be executed by a computer processor. The hardware 14 may comprise any computer system having at least one computer processor, such as a Pentium® III processor available from the Intel Corporation of Santa Clara, California.

The DELI 10 is an optional execution layer, that is, it may be bypassed as along path 16 so that an application can execute directly on the hardware 14 without being transformed. The DELI 10 includes four main components, the core 20, the application program interface (API) 22, the transparent mode layer 24, and the system control and configuration layer 26. The core 20 provides services for the caching, optimization and linking of native code fragments, or code fragments which correspond to the instruction set architecture of the hardware 14. The API 22 exports functions accessing the caching and linking to the application, enabling explicit control of the core 20 over the execution. The transparent mode layer 24 enables the core 20 to transparently gain control over the execution, that is, the application 12 has no indication that its execution is being controlled by the DELI 10 when it runs through the transparent mode layer 24. Finally, the system control and configuration layer 26 allows the application 12 to control the DELI operation via the API 22. For example, the application 12 can control how the DELI 10 operates and how it reacts to certain system events. This layer 26 allows configuration of the core 20 by supplying policies for the caching, linking, and optimizing of code. The system control and configuration layer 26 also controls whether the transparent mode of the DELI 10 is enabled, thus determining whether the core 20 receives input from the API 22 or the transparent mode layer 24.

The DELI core 20 exports services for caching and linking code fragments. The production of code fragments from the application 12 will be described in detail hereinafter.

The DELI 10 includes one or more caches for code (e.g., 30, 32, and 34), either in hardware caches on the processor(s) or created in the main local memory of the hardware 14, which are managed by a cache manager 36 in the core 20. Mapping the caches (e.g., 30, 32, and 34) in hardware caches onboard the processor(s) in the hardware, if available and large enough, greatly increases performance because of the reduced instruction cache refill overhead, increased memory bandwidth, etc.

The DELI 10 also contains a fragment manager 42 and an optimization manager 44 to layout and optimize code fragments that are passed to the core 20 from the application 12, either via the API 22 or the transparent mode layer 24. The DELI 10 has full control over the contents and layout of the code copies.

If the DELI 10 has gained control over the execution of the application 12, that is, the application 12 does not bypass the DELI 10 via the DELI bypass path 16, the application 12 generally does not execute directly on the hardware 14. Rather, application code executes through the DELI 10 in the form of code fragment copies that the DELI 10 maintains in its code cache (e.g., 30, 32, and 34). However, the DELI 10 may execute sections or fragments of original, untransformed code from the application 12. Alternatively, the DELI 10 may be configured to repeatedly take control of an application 12, relinquish control, then take control again.

The core 20 exports two main services to both the API 22 and the transparent mode layer 24. The first is for caching specific code fragments, the second is for executing a previously cached code fragment. When these two services are used, a core controller 40 in the DELI core 20 dispatches the messages requesting the services to the appropriate module in the core 20, as will be described in more detail hereinafter.

The API 22 in turn exports these two services to the application 12 (which, as discussed above, may include the OS). These services exported by the API 22 enable the application 12 to control the operation of the DELI 10 by (i) explicitly passing a code fragment to the core 20 for caching or by (ii) instructing the DELI 10 to execute a specific code fragment out of its cache (e.g., 30, 32, or 34). Applications that can greatly benefit from these services include system emulators and dynamic translators. For these applications the API 22 provides an efficient means to quickly build just-in-time translators; instead of repeatedly emulating the same sections of code the system emulator can create a translation of the emulated code fragment and pass it to the DELI 10 to be cached. The next time the same section of code needs to be emulated, the emulator can instruct the DELI 10 to execute the cached translated code. Thus, subsequent executions of the same section of code will be executed as code fragments from the cache (e.g., 30, 32, and 34) which are native to the instruction set architecture of the hardware 14. Executing these native code fragments from the cache (e.g., 30, 32, and 34) is much faster than emulating the original code. Thus, when the DELI 10 is operating in this non-transparent mode, the API 22 enables the application 12 to control the operation of the DELI 10.

The API 22 also exports functions for initializing and cleaning up (releasing memory, etc.) the DELI 10, initializing and cleaning up threads (each application 12 has at least one thread) and starting and stopping execution of the application 12 by the DELI 10. The API 22 also exports functions for caching and executing code fragments, and functions for configuring the DELI 10.

The DELI 10 can also operate in a transparent mode via the transparent mode layer 24. The transparent mode layer 24 includes an injector 46 which is used to transparently gain control over a running application 12. The injector 46 gains control of the application 12 before the application 12 starts execution and is not used thereafter. In order to control the application 12 transparently, the DELI 10 avoids modifying the application's 12 executable image. Otherwise, exception handling may be impeded. The DELI 10 may gain control over the application 12 in a number of ways, each of which loads the application 12 binary without changing the virtual address at which it is loaded.

The first method which can be used by the DELI 10 to gain control over the application 12 is to modify the kernel loader. The DELI 10 is compiled as a shared library that is automatically loaded by the kernel loader when it loads the application's executable image. The kernel loader then calls the DELI 10 entry point instead of the application's main entry point. The advantage of this method is that it is truly transparent to the user. The disadvantage is that it requires OS modification.

Another method that avoids modification to the kernel loader is to use a user level loader that leverages the kernel loader without modifying it to load the application in memory in suspended mode, and later inject into it instructions (e.g., on the application stack) that will load the DELI 10 shared library later when the application is resumed.

Another method which can be used by the DELI 10 to gain control over the application 12 is to use *ptrace* to attach to the application 12. Ptrace is a mechanism that allows one process to control another, and is typically used by debuggers. The DELI 10 can be set up as a separate process that attaches to the application 12 via *ptrace*, and runs it until the point where *crt0* (the execution start up code at the top of the application's binary image) is about to call the application's entry point. Execution of the application 12 is then suspended, and the DELI 10 fetches the application instructions and executes them on its behalf. Like the first method, this is also transparent, except for the creation of another process. The disadvantage of this method is its dependence on the *ptrace* interface, which is not supported by many OS's such as embedded real time operating systems.

Another method which can be used by the DELI 10 to gain control over the application 12 is to extend the application's text segment in a separate copy of the executable file. The application's binary image can then be copied to a temporary location, and the application's text segment extended by adding the DELI text segment at the end. Then, the *start* symbol (the entry point that is called by *crt*0) is changed to the DELI entry point. This new executable file is then executed using *exec*. The original application's text segment is still loaded at the same virtual address that it would normally have, but the DELI 10 will gain control before the actual application 12 starts. The advantage of this method is that it does not require modification of any kernel routines, nor does it rely on any special operating system features like *ptrace*. It is a complete user space solution. The disadvantage is the overhead of doing the file copy, since the application's executable image cannot be modified and maintain complete transparency.

Another method which can be used by the DELI 10 to gain control over the application 12 is to use a special version of *crt*0. *Crt0* is the execution start up code typically created from the assembly file crt0.s) that is linked to the executable by the link editor *1d* at link-time. The kernel loader transfers control to the top of *crt0* after it has loaded the entire executable image. The *crt0* code is responsible for picking up the command line arguments, setting up the initial stack and data segment, and then making a call to the value of the *start* symbol (usually the main() function of the application 12). Prior to calling the application 12 entry point, *crt0* maps the dynamic link loader *d1d*, which then loads any dynamically linked libraries (DLL's) referenced by the application 12. A custom version of *crt0* can be used to additionally map the DELI code (itself compiled as a DLL), and call the DELI's entry point instead of the one defined by the *start* symbol. The disadvantage of this method is that it requires re-linking of the application's object files. The first three methods discussed, on the other hand, will work with legacy application binaries without re-linking. However, this problem can optionally be overcome by using a special version of *d1d* which loads the DELI DLL in addition to any libraries invoked by the application 12, and which patches the *crt0* code so that it jumps to the DELI's entry point instead of the application's.

These four exemplary methods described above for taking control of execution of the application 12 by the DELI 10 avoid modifying the application's binary image. The program instructions generated by the compiler for the application 12 are loaded unmodified into memory. These or any other suitable methods may be used by the injector 46 to transparently control execution of the application 12. For example, other methods are available depending on the definition of and the requirements for transparency.

Once injected an instruction fetch controller 50 extracts copies of portions, or traces, of the application binary code and passes them to the DELI core 20 for caching. Instead of directly executing the application code, the instruction fetch controller 50 directs the core 20 to execute the appropriate cached copies of the code out of its code cache (e.g., 30, 32, and 34). The transparent mode of the DELI 10 is preferably implemented in the transparent mode layer 24, although it could also be implemented by calls through the API 22.

In one exemplary embodiment, the instruction fetch controller 50 may select code traces from the application 12 in the manner shown and described in U.S. Patent Application Serial No. 09/186,945, filed November 5, 1998, entitled "Method for Selecting Active Code Traces for Translation in a Caching Dynamic Translator," which is incorporated herein by reference for all that it discloses. The selection of code traces utilized in one exemplary embodiment of the DELI 10 and shown and described in U.S. Patent Application Serial No. 09/186,945 identifies hot traces from the application 12 to transform. These hot traces are code segments which are frequently executed in the application 12, generally beginning at the instruction after a backward taken branch and continuing to the next backward taken branch.

Alternatively, code traces may be selected in the manner shown and described in U.S. Patent Application Serial No. 09/312,296, filed May 14, 1999, entitled "Low Overhead Speculative Selection of Hot Traces in a Caching Dynamic Translator," which is also incorporated herein by reference for all that it discloses.

The system control and configuration layer 26 serves two main functions in the DELI 10. First, it enables configuration of the DELI core 20 operation and the policies for the caching and linking of code, and second, it supports the abstraction of system and hardware functionality. Although the DELI 10 is not limited to any particular type of policy or policy content, these exemplary policies determine behavior of the DELI 10 such as how traces of code are extracted from the application 12, how code fragments are created from the original code traces and are transformed and cached, and how multiple code fragments can be linked to form larger code fragments. Configuration of the DELI 10 can be accomplished either by the API 22 or at system build time. For example, for transparent mode the DELI 10 configuration can be hard coded into the DELI 10 program, fixing the configuration at build time. Alternatively, the DELI 10 can be dynamically configured by function calls in the API 22. This configuration of the core 20 configures the DELI 10 to react in specific ways to certain system and/or hardware events such as exceptions and interrupts. Examples of configuration options which may be desirable to include in the DELI 10 are the size of the code caches (e.g., 30, 32, and 34), whether a log file is created, and whether code fragments should be optimized.

The system control and configuration layer 26 supports the abstraction of system and hardware functionality by intercepting instructions in the application binary code directed at system and hardware functionality. These instructions are then replaced by the fragment manager 42 under the direction of the system control and configuration layer 26 as part of the fragment formation process. The system control and configuration layer 26 identifies instructions directed at missing or defective hardware and causes the fragment manager 42 to replace them with corresponding instructions directed at similar but different hardware 14 or with software simulations of the original hardware.

The mode the DELI 10 operates in, transparent or non-transparent, is preferably determined and fixed at build time for the DELI system. For non-transparent mode, the DELI 10 is built as a dynamic link library (DLL) which exports functions in the API 22 that the application 12 can access. For transparent mode, the injector 46 transparently gains control over the application 12, such as in one of the four manners described above.

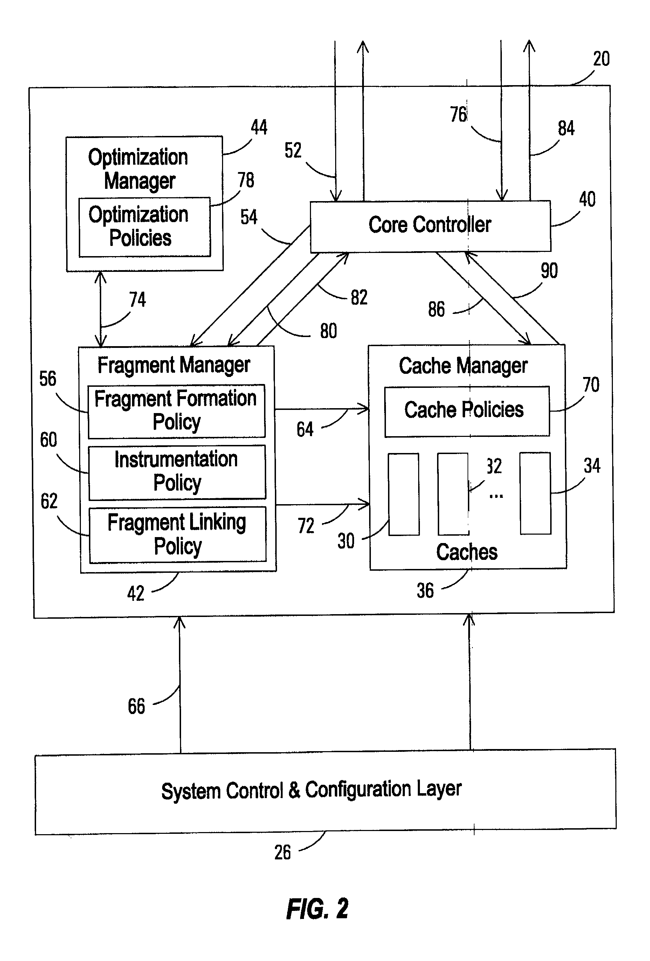

Now that the elements of the DELI 10 have been described, the core 20 will be described in more detail. Referring now to FIG. 2, the DELI core 20 accepts two types of requests from the API 22 or the transparent mode layer 24, as mentioned above. First, requests 52 for caching and linking a code fragment through a function interface such as 'DELI_emit_fragment(tag, fragbuf)'. This function receives as its parameters a code fragment and an identifying tag to store in the DELI cache (e.g., 30, 32, and 34). Second, the core 20 accepts requests for initiating execution at a specific code fragment tag through a function interface such as 'DELI_execute_fragment(tag)', which identifies a code fragment stored in the cache (e.g., 30, 32, and 34) to pass to the hardware 14 for execution.

The core controller 40 processes these requests and dispatches them to the appropriate core module. A request 54 to emit a code fragment with a given tag is passed to the fragment manager 42. The fragment manager 42 transforms the code fragment according to its fragment formation policy 56, possibly instruments the code according to its nstrumentation policy 60 and links the code fragment together with previously cached fragments according to its fragment linking policy 62. For example, the fragment manager 42 may link, or connect, multiple code fragments in the cache, so that at the end of executing a code fragment, rather than returning, execution jumps to another code fragment, thereby increasing the length of execution from the cache. To accomplish this, the fragment manager 42 issues fragment allocation instructions 64 to the cache manager 36. The fragment manager 42 then sends a request to the cache manager 36 to allocate the processed code fragment in one of the code caches (e.g., 30, 32, or 34).

The cache manager 36 controls the allocation of the code fragments and is equipped with its own cache policies 70 for managing the cache space. However, the fragment manager 42 may also issue specific fragment deallocation instructions 72 to the cache manager 36. For example, the fragment manager 42 may decide to integrate the current fragment with a previously allocated fragment in which case the previous fragment may need to be deallocated.

In one exemplary embodiment, the cache manager 36 and fragment manager 42 may manage the code caches (e.g., 30, 32, or 34) and code fragments in the manner shown and described in U.S. Patent No. 6,237,065, issued May 22, 2001, entitled "A Preemptive Replacement Strategy for a Caching Dynamic Translator Based on Changes in the Translation Rate," which is incorporated herein by reference for all that it discloses. Alternatively, management of the code caches (e.g., 30, 32, or 34) and code fragments may be performed in the manner shown and described in U.S. Patent Application Serial No. 09/755,389, filed January 5, 2001, entitled "A Partitioned Code Cache Organization to Exploit Program Locality," which is also incorporated herein by reference for all that it discloses.

Prior to passing the fragment to the cache manager 36, the fragment manager 42 may pass 74 the fragment to the optimization manager 44 to improve the quality of the code fragment according to its optimization policies 78.

In one exemplary embodiment, the optimization manager 44 may optimize code fragments in the manner shown and described in U.S. Patent Application Serial No. 09/755,381, filed January 5, 2001, entitled "A Fast Runtime Scheme for Removing Dead Code Across Linked Fragments," which is incorporated herein by reference for all that it discloses. Alternatively, the optimization manager 44 may optimize code fragments in the manner shown and described in U.S. Patent Application Serial No. 09/755,774, filed January 5, 2001, entitled "A Memory Disambiguation Scheme for Partially Redundant Load Removal," which is also incorporated herein by reference for all that it discloses.

The optimization manager 44 may also optimize code fragments using classical compiler optimization techniques, such as elimination of redundant computations, elimination of redundant memory accesses, inlining functions to remove procedure call/return overhead, etc.

As mentioned above, the fragment manager 42 transforms the code fragment according to its fragment formation policy 56. The transformations performed by the fragment manager 42 include code relocation, such as changing memory address references by modifying relative addresses, branch addresses, etc. The layout of code fragments may also be modified, changing the physical layout of the code without changing its functionality. These transformations are performed by the fragment manager 42 on fragments received through the API 22 and on code traces received from the instruction fetch controller 50.

Also mentioned above is the code instrumentation performed by the fragment manager 42 according to its instrumentation policy 60. This instrumentation gathers data for code profiling, such as data on the frequency of execution of code fragments, the frequency with which a memory address is accessed, etc. Counters are established to collect these statistics in order to facilitate fragment formation or deallocation.

These policies, again, are configured 66 by the system control and configuration layer 26, which receives policy instructions sent either through the API 22 or established at system build time. The policies may consist of options for different ways to create, instrument, optimize, and link fragments, or the policies may simply be hardcoded algorithms in the DELI 10 for performing these tasks. However, the DELI 10 is not limited to any particular algorithms for fragment formation, instrumentation, optimization, etc. The DELI 10 provides a set of tools to facilitate this dynamic transformation of code, but is not limited to any one type of code transformation.

The second type of request accepted by the DELI core 20 is a request 76 to execute a fragment identified by a given tag. The core controller 40 issues a lookup request 80 to the fragment manager 42 which returns a corresponding code cache address 82 if the fragment is currently resident and active in the cache (e.g., 30, 32, and 34). The fragment manager 42 maintains a lookup table of resident and active code fragments. Alternatively, the fragment manager 42 or cache manager 36 could use any suitable technique for tracking whether 20 code fragments are resident and active. If the fragment is not currently resident and active in the cache (e.g., 30, 32, and 34) the fragment manager 42 returns an error code to the core controller 40, which returns 84 the fragment tag back to the initial requester as a cache miss address.

If the fragment is currently resident and active, the core controller 40 then dispatches 86 the initial request to the cache manager 36 along with its cache address. The cache manager 36 in turn transfers control to the addressed code fragment in one of its caches (e.g., 30, 32, or 34), thus executing the addressed code fragment. Execution remains focused in the code caches (e.g., 30, 32, and 34) until a cache miss occurs, that is, until a copy for the next to be executed application address is not currently resident in the cache. A cache miss is reported 90 from the cache manager 36 to the core controller 40 and in turn back 84 to the initial requester.

The DELI 10 can be used to dynamically transform and cache an OS as well as an application 12. However, to do this, the DELI 10 must be able to run beneath the OS kernel in a highly privileged mode. The mode in which the DELI 10 must run in order to control the OS is dependent upon the processor in the hardware 14.

The DELI 10 can also be used to facilitate execution of networked applications, as shown and described in U.S. Patent Application Serial No. 09/874,170 filed June 4, 2001, entitled "A Networked Client-server Architecture for Transparently Transforming And Executing Applications," which is incorporated herein by reference for all that it discloses. In this embodiment, the DELI 10 acts as a catalyst to send the request for new code fragments across a network to a server, then caches, links, and executes the code fragments on the local machine (e.g., 14).

Having described the DELI 10 and its use to dynamically transform code, as well as some of its more significant features and advantages, the use of the DELI 10 to facilitate emulators will now be described. However, before proceeding with this description it should be noted that the DELI 10 is not limited to use with any particular type of application or hardware. Furthermore, the exemplary preferred embodiment of the DELI 10 may be reconfigured and modified by those skilled in the art without departing from the inventive concepts disclosed herein. For example, the modules of the DELI 10 need not be organized as they have been described herein in exemplary fashion. The DELI 10 could be organized in any number of suitable ways to perform the functions described herein.

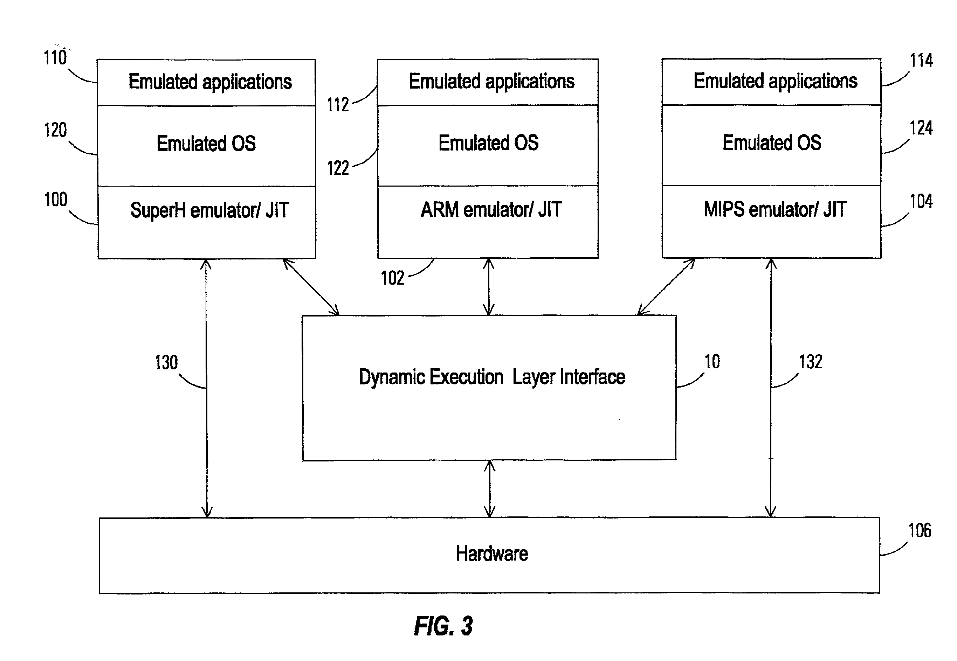

Referring now to FIG. 3, the DELI 10 is used to transform code from one or more emulators or just-in-time (jit) compilers (e.g., 100, 102, and 104), rather than a single, possibly native, application 12. The transformed code is then executed on hardware 106 which may comprise a computer system or other type of appliance with at least one processor, such as one with a very-long instruction word (VLIW) architecture. For example, the emulators may include a SuperH emulator/jit 100, an ARM emulator/jit 102, and a MIPS emulator/jit 104, each emulating applications 110, 112, and 114 running on emulated operating systems 120, 122, and 124, respectively. Thus, given a code base in binary or source code form for an existing instruction set architecture, this software system enables the code to be executed on hardware which is either completely or partially incompatible due to a different instruction set architecture or different components and peripherals. By dynamically emulating and translating the original non-native code into native code for the hardware 106, including caching translated code fragments, software performance can be maintained and even improved.

A just-in-time compiler receives segments of legacy or otherwise non-native binary code to translate, decodes the segments to create new program code, possibly in a high level language, which is compiled into native binary code for the hardware 106 as it is needed for execution. A SuperH® emulator/jit emulates the SuperH® processor architecture such as that used in a reduced instruction set computing (RISC) processor available from Hitachi, Ltd. of Tokyo, Japan. An ARM® emulator/jit emulates the ARM® processor architecture such as that in a RISC processor available from ARM Ltd. of Cambridge, England. A MIPS® emulator/jit emulates the MIPS® processor architecture such as that used in RISC processors designed and licensed from MIPS Technologies, Inc. of Mountain View, California.

Many emulators (e.g., 100, 102, and 104) are made up of replacement code fragments corresponding to non-native functions or code fragments. When, during the emulation of a non-native application, the emulator encounters a non-native function, the emulator replaces it with the replacement emulated code fragment. If the emulator is designed as a DELI-aware application, it will explicitly pass its replacement emulated code fragments to the DELI 10 using the API 22 to be transformed, cached, and executed.

The emulators 100, 102, and 104 may execute directly on the hardware 106 (as through paths 130 and 132). However, the emulators 100, 102, and 104 can greatly benefit by running through the DELI 10. As native code fragments are generated by the emulators 100, 102, and 104, they can be cached by the DELI 10 as discussed above. The next time the emulators 100, 102, and 104 encounter the same corresponding legacy code fragment, they can instruct the DELI 10 to execute the cached native code fragment previously created, thereby greatly increasing the speed of the emulation. Thus, the DELI 10 converts an interpreted emulation system into a cached emulation system which can increase speed in a typical scenario by about 10 times. Running the emulators 100, 102, and 104 through the DELI 10 also adds modularity to the system, enabling greater hardware independence and reuse of code. Although each emulator (e.g., 100, 102, or 104) could reimplement all necessary functions, it is much more efficient for the DELI 10 to provide at least basic code caching functions, thus simplifying the emulators and easing transitions to different target hardware 106.

Multiple applications such as the emulators 100, 102, and 104 can be simultaneously executed through a single instantiation of the DELI 10. As discussed above, multiple unique threads can be initialized and executed through the DELI 10. When running through the API 22, each application (e.g., 100, 102, and 104) acts as an individual thread. The DELI 10 may establish separate code caches (e.g., 30, 32, and 34) for each application (e.g., 100, 102, and 104). Alternatively, the DELI 10 may store code fragments from multiple applications (e.g., 100, 102, and 104) in a single code cache (e.g., 15 30), relying on unique tags or identifiers associated with each code fragment to differentiate them.

While illustrative and presently preferred embodiments of the invention have been described in detail herein, it is to be understood that the teachings herein may be otherwise variously embodied and employed, and that the appended claims are intended to be construed to include such variations.

The disclosures in United States patent application No. 09/924,260, from which this application claims priority, and in the abstract accompanying this application are incorporated herein by reference.

## Claims

1. Apparatus for dynamically transforming and caching at least one computer program (12), the apparatus including:
a. one or more computer readable storage media; and
b. computer executable instructions stored in the one or more computer readable storage media, the computer executable instructions comprising:
i. instructions (42) for dynamically transforming code fragments;
ii. instructions for caching (36) said code fragments;
iii. instructions for causing said code fragments to be executed by at least one computer processor; and
iv. instructions providing an application programming interface (22) enabling said at lest one computer program to activate said instructions for dynamically transforming said code fragments and said instructions for caching said code fragments.

2. Apparatus as in claim 1, wherein said instructions providing an application programming interface (22) enabling said at least one computer program (12) to provide said code fragments for said instructions (42) for dynamically transforming code fragments and for said instructions (36) for caching said code fragments.

3. Apparatus as in claim 1, wherein said instructions providing an application programming interface (22) include providing functions for caching and executing a specified code fragment.

4. Apparatus as in claim 1, 2 or 3, wherein said at least one computer program (12) comprises a plurality of emulators (100, 102, 104).

5. Apparatus as in claim 4, wherein said plurality of emulators (100, 102, 104) comprise emulators for at least two different computer architectures.

6. Apparatus as in any preceding claim, wherein said computer executable instructions include instructions (24) for transparently obtaining said code fragments from said at least one computer program for said instructions (42) for dynamically transforming said code fragments and for said instructions (36) for caching said code fragments.

7. Apparatus for dynamically transforming and caching at least one computer program (12), the apparatus including:
a. one or more computer readable storage media; and
b. computer executable instructions stored in the one or more computer readable storage media, the computer executable instructions comprising:
i. instructions (42) for dynamically transforming code fragments;
ii. instructions (44) for dynamically optimising said code fragments;
iii. instructions (36) for caching said code fragments;
iv. instructions (26) for changing hardware control code in said code fragments;
v. instructions (24) for transparently obtaining said code fragments from said at least one computer program;
vi. instructions providing an application programming interface (22) enabling said at least one computer program to activate said instructions for dynamically transforming and caching said code fragments; and
vii. instructions for causing said code fragments to be executed by at least one computer processor (14).

8. Apparatus for executing a plurality of software applications (110, 112, 114), the apparatus including:
a. one or more computer readable storage media; and
b. computer executable instructions stored in the one or more computer readable storage media, the computer executable instructions comprising:
i. instructions (22, 24) for obtaining portions of computer program code from said plurality of software applications;
ii. instructions (42, 36) for dynamically transforming and caching said portions of computer program code to create transformed code fragments; and
iii. instructions for executing said transformed code fragments.

9. Apparatus as in claim 8, wherein said plurality of software applications include emulators (100, 102, 104).

10. Apparatus as in claim 9, wherein said plurality of software applications emulate computer systems (100, 102, 104) with at least two different instructions set architectures.
